# EUROPÄISCHE PATENTSCHRIFT

(11) **EP 1 674 764 B1**
(45) Veröffentlichungstag und Bekanntmachung des Hinweises auf die Patenterteilung: **30.06.2010**
(21) Anmeldenummer: 05027842.3
(22) Anmeldetag: 19.12.2005
(51) Int. Cl.: F16H 25/24

(54) **Gewindemuttereinrichtung für eine Linearantriebsvorrichtung**
A nut assembly for a linear actuator apparatus
Ecrou d'engrenage pour dispositif actionneur linéaire

(30) Priorität: 22.12.2004 CH 21252004
(43) Veröffentlichungstag der Anmeldung: 28.06.2006
(73) Patentinhaber: AB SKF, 415 50 Göteborg (SE)
(72) Erfinder: Wyss, Thomas, 4450 Sissach (CH); Greilinger, Daniel, 4466 Ormalingen (CH); Soltermann, Marcel, Cedarburg WI 53012 (US)
(74) Vertreter: Klein, Friedrich Jürgen

(56) Entgegenhaltungen:
- EP-A- 1 134 454
- GB-A- 1 409 961
- US-A- 2 319 551

## Beschreibung

Die Erfindung betrifft eine Gewindemuttereinrichtung für eine mit einer drehbaren Spindel versehene Linearantriebsvorrichtung, die mit einer Hauptmutter versehen ist, wobei die Hauptmutter zur Anordnung mit ihrem Innengewinde auf dem Außengewinde der Spindel vorgesehen ist, und bei einer Drehbewegung der Spindel zur Ausführung einer translatorischen Verschiebebewegung bestimmt ist, ferner eine Sicherheitsmutter aufweist, die dazu bestimmt ist im Normalbetrieb des Linearantriebs mit ihrem Innengewinde zumindest im wesentlichen nicht in Eingriff mit dem Außengewinde der Spindel zu stehen und bei einem Versagen des Gewinde der Hauptmutter mit dem Gewinde der Spindel in Eingriff zu kommen.

In vielen Bereichen der Technik werden lineare Verstellbewegungen benötigt. Um diese Bewegung zu erzeugen werden oftmals Linearantriebsvorrichtungen verwendet, die eine rotative Antriebsbewegung, beispielsweise eines Elektromotors, mittels einer Spindel und einer auf der Spindel angeordneten Mutter in eine translatorische Bewegung transformieren. Die Mutter ist hierbei gegen rotative Bewegungen gesichert, wodurch sie sich rein translatorisch bewegt. Diese Bewegung der Mutter wird als Verstellbewegung für eine zu bewegende Last genutzt. Mögliche Verwendungen solcher Linearantriebsvorrichtungen sind beispielsweise Hubsäulen, Linearantriebe und dergleichen.

Es hat sich gezeigt, dass verschiedene Umstände zu einem Versagen der Mutter, insbesondere des Gewindes der Mutter, führen können. Ohne hiergegen Sicherheitsmassnahmen zu treffen wäre die Mutter dann auf der Spindel frei beweglich. Insbesondere bei einer vertikalen Ausrichtung der Spindel und bei grossen Lasten, kann dies zu einer erheblichen Beschädigung der Last und der Linearantriebsvorrichtung führen. Sind mit solchen Antrieben Personen oder Lasten in der Nähe von Personen zu bewegen, so sind diese Personen stark gefährdet.

Aus diesem Grund sind bereits Systeme mit Sicherheitsmuttern entwickelt worden, die erst dann zum Tragen kommen, wenn die im Normalbetrieb tragende Mutter versagt. Die Sicherheitsmutter weist hierzu üblicherweise ein Gewinde auf, das solange nicht lasttragend ist, solange die Hauptmutter trägt und damit noch nicht versagt hat. Dazu wird die Sicherheitsmutter an einer rotativen Bewegung gehindert, so dass die Sicherheitsmutter nicht an der Flanke der Hauptmutter auflaufen kann und dadurch das Gewinde der Sicherheitsmutter mit dem Gewinde der Spindel in den Eingriff kommen kann.

In der EP 1 134 454 A1 wird deshalb bereits vorgeschlagen, eine metallische Sicherheitsmutter an einem Ende der Hauptmutter in einer hohlzylindrischen Ausnehmung anzubringen, die mit zwei sich diametral gegenüberliegenden Nasen versehen ist. An ihrer Umfangsfläche ist die Sicherheitsmutter mit vier um jeweils 90° zueinander versetzten Kerben versehen. Die Sicherheitsmutter greift mit zwei Ihrer Kerben in diese beiden Nasen und wird damit in Bezug auf Ihre rotative Position gegenüber der Hauptmutter ausgerichtet. Es ist jedoch zu befürchten, dass trotz dieser Anordnung bei der Montage der Sicherheitsmutter und der Hauptmutter auf der Spindel zur exakten Ausrichtung der drei Elemente erheblicher Justageaufwand betrieben werden muss. Erfolgt keine exakte Ausrichtung dieser drei Elemente so kann dies ein Versagen der Sicherheitsmutter zur Folge haben. Ausserdem lässt diese Anordnung die Linearantriebsvorrichtung in Abhängigkeit von der Reihenfolge der Hauptmutter und der Sicherheitsmutter in Bezug auf die Belastungsrichtung des Antriebs entweder nur als Zugantrieb oder nur als Druckantrieb zu.

Der Erfindung liegt deshalb die Aufgabe zugrunde eine Gewindemuttereinrichtung der eingangs genannten Art zu schaffen, die eine einfachere Montage zulässt und hierbei die Gefahr von Fehlausrichtungen vermindert.

Diese Aufgabe wird bei einer Gewindemuttereinrichtung der eingangs genannten Art erfindungsgemäß dadurch gelöst, dass die Hauptmutter einen ersten und einen zweiten Teil aufweist, die beiden Teile voneinander beabstandet sind und jeder Teil mit einem Gewindeabschnitt der Hauptmutter versehen ist, wobei die Sicherheitsmutter zur Anordnung zwischen den beiden Gewindeabschnitten vorgesehen ist.

Die Aufnahme der Sicherheitsmutter zwischen zwei Teile bzw. Abschnitten der Hauptmutter ermöglicht eine positionskorrekte Anordnung der Sicherheitsmutter in axialer Richtung des Antriebs vorzunehmen, ohne dass hierfür zusätzlicher Justageaufwand nötig wird. Die Sicherheitsmutter kann in einem Raum zwischen den beiden Abschnitten der Hauptmutter angeordnet werden und durch diese in die vorgesehene axiale Position gebracht und dort gehalten werden.

Es kann hierbei zweckmässig sein, dass das Spiel der Sicherheitsmutter in axialer Richtung zwischen den beiden Abschnitten der Hauptmutter geringer ist als die Steigung des Gewindes der Sicherheitsmutter. Hierdurch wird eine eindeutig vorbestimmte axiale Position der Sicherheitsmutter zwischen den beiden Hauptmutterabschnitten ermöglicht, ohne dass hierfür zusätzliche konstruktive Massnahmen oder zusätzlicher Justageaufwand erforderlich ist. Bei der Montage der Gewindemuttereinrichtung auf der Spindel kann die Sicherheitsmutter ihre vorgegebene Position dann von alleine finden. Das Gewinde der Sicherheitsmutter wird hierbei zwischen den beiden Hauptmutterabschnitten in einer axialen Position angeordnet, in der es eine Fortsetzung des Gewindes der Hauptmutter darstellt.

Zur weiteren Vereinfachung der Montage kann jedoch in einer bevorzugten Ausgestaltung der Erfindung eine Positionierungshilfe für die Sicherheitsmutter vorgesehen sein, die Mittel zur Anordnung der Sicherungsmutter in einer vorbestimmten Position in Bezug auf die Hauptmutter aufweist. Hiermit kann mit der Erfindung eine eineindeutige Position der Sicherheitsmutter erzielt werden, ohne dass eine zusätzliche Justage der Sicherheitsmutter gegenüber der Hauptmutter erforderlich wird.

In einer bevorzugten Ausführungsform der Erfindung kann die Positionierungshilfe Mittel zur Positionierung der Sicherheitsmutter in einer vorbestimmten radialen Position aufweisen. Diese Mittel können insbesondere in einer vorbestimmten Position gegenüber einem Gewindeanfang der Sicherheitsmutter angeordnet sein. Ergänzend oder alternativ hierzu kann in weiteren Ausführungsformen auch eine Positionierungshilfe vorgesehen sein, die Mittel zur Positionierung der Sicherheitsmutter in einer vorbestimmten axialen Positionierung aufweist. Ein solches Mittel, das zur radialen und/oder axialen Positionierung dient, kann beispielsweise ein Halter sein, in den die Sicherheitsmutter einsetzbar ist.

Bei derartigen Ausführungsformen der Erfindung mit einer Positionierungshilfe kann sich die Montage der Sicherheitsmutter, einschliesslich deren positionsgenauen Anordnung gegenüber der Hauptmutter, auf Steckvorgänge beschränken. Erfindungsgemässe Gewindemuttereinrichtungen können somit eine schnelle Montage ermöglichen, die aber trotzdem die bisher oftmals üblichen Montagefehler ausschliesst.

Anders als vorbekannte Lösungen kann eine mit der erfindungsgemässen Gewindemuttereinrichtung versehene Linearantriebsvorrichtung sowohl in einer Verwendung als Druckantrieb als auch als Verwendung als Zugantrieb mittels der Sicherheitsmutter die gewünschte Sicherheitsfunktion ausüben. Je nach dem ob bei Versagen der Hauptmutter die Last am Antrieb als Zugkraft oder als Drucklast wirkt, liegt der eine oder der andere Teil der Hauptmutter an der Sicherheitsmutter an und überträgt die Last auf die Sicherheitsmutter. Damit ist es für den Hersteller der Linearantriebsvorrichtung nicht mehr erforderlich, Linearantriebsvorrichtungen entweder als Druck- oder als Zugantrieb zu montieren, zu bevorraten und zu kennzeichnen. Bei dem Anwender der Linearantriebsvorrichtung wird die Gefahr ausgeschlossen, eine falsche Antriebsvorrichtung zu beschaffen und/oder in Anwendungen einzubauen.

Damit die Linearantriebsvorrichtung in Druck- und Zugrichtung beim Versagen der Hauptmutter ähnliche Eigenschaften aufweist, können die beiden Gewindeabschnitte der Hauptmutter zumindest im wesentlichen gleich lang sein.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig.1: eine perspektivische und teilweise geschnittene Darstellung einer Hubsäule, die mit einem erfindungsgemässen Linearantrieb versehen ist;
- Fig. 2: eine perspektivische Teildarstellung eines Schubrohrs mit darin eingesetzter Spindel und erfindungsgemässer Gewindemuttereinrichtung des in Fig. 1 gezeigten Linearantriebs;
- Fig.3: eine perspektivische Schnittdarstellung des Schubrohres aus Fig. 2 mit der ebenfalls in einer Schnittdarstellung gezeigten Gewindemuttereinrichtung;
- Fig.4: eine erfindungsgemässe Gewindemuttereinrichtung mit einem noch nicht montierten Haltestück und Sicherheitsmutter in einer perspektivischen Darstellung;
- Fig. 5: eine vergrösserte Darstellung des Haltestücks aus Fig. 4
- Fig. 6: eine vergrösserte Darstellung der Gewindemutter aus Fig. 4;

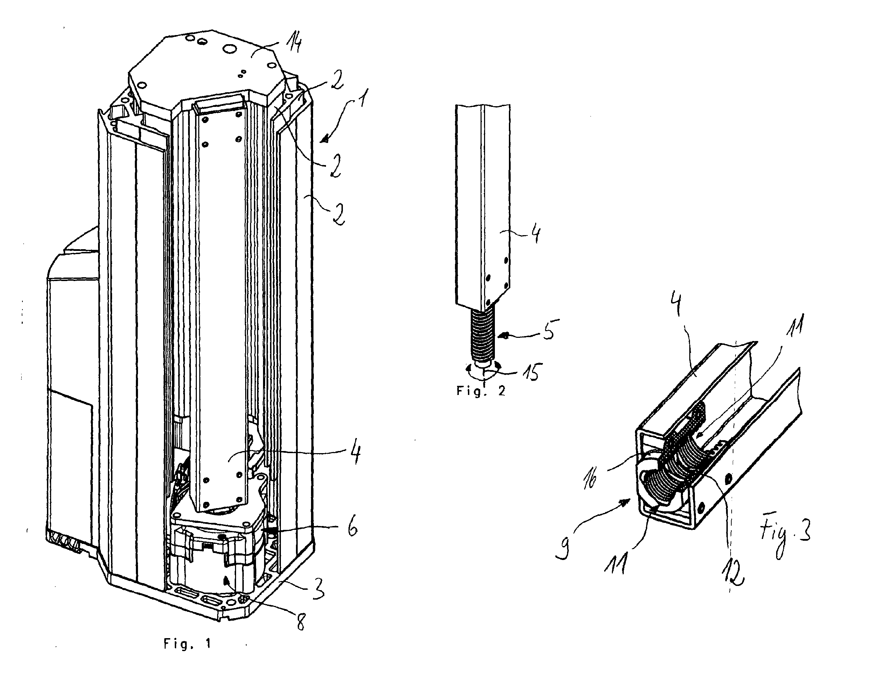

Fig. 1 zeigt als eines von vielen Anwendungsbeispielen für eine erfindungsgemässe Linearantriebsvorrichtung eine teleskopische Hubsäule 1, die mit mehreren relativ zueinander beweglichen Teleskoprohren 2 versehen ist. Bei dem Ausführungsbeispiel von Fig. 1 ist das in Bezug auf seine Querschnittsfläche grösste Teleskoprohr 2 mit einem Standelement 3 verbunden, mit dem die Hubsäule 1 auf einer Standfläche angeordnet werden kann. Jedes Teleskoprohr 2 der Hubsäule ist mit seinem bezüglich der Querschnittsfläche nächst grösseren Teleskoprohr 2 in einer Weise wirkverbunden, durch die ein ausfahrendes Schubrohr 4 bei Erreichen seiner maximalen Ausfahrlänge das mit ihm wirkverbundene Teleskoprohr mitnimmt und somit auch dieses Teleskoprohr aus der Hubsäule ausfährt. In der Darstellung von Fig. 1 sind sämtliche Teleskoprohre 2 der Hubsäule 1 vollständig eingefahren.

Im Inneren der Hubsäule 1 ist im Bereich des Standelements 3 eine Linearantriebsvorrichtung 6 angeordnet, die mit einem Motor versehen ist, beispielsweise einem Gleichstrommotor. Der Gleichstrommotor ist mit einer (in Fig. 2 näher dargestellten) Spindel 5 wirkverbunden, die durch den Gleichstrommotor in eine rotative Bewegung versetzbar ist. Auf einem Aussengewinde der Spindel 5 ist eine in den Fig. 2 bis 6 dargestellte Gewindemuttereinrichtung 9 angeordnet, die eine Hauptmutter 11 und eine Sicherheitsmutter 12 aufweist.

Die Gewindemuttereinrichtung 9 ist in ein unteres Ende des Schubrohres 4 eingeschoben und an diesem durch mehrere Verstiftungen 13 gesichert. Das Schubrohr 4 wiederum ist durch eine formschlüsige Verbindung an einer oberen Deckenplatte 14 der Hubsäule gegen Drehbewegungen gesichert und befestigt.

Durch diese Anordnung führt eine Drehbewegung der Spindel 5 in eine erste Drehrichtung zu einer translatorischen Aufwärtsbewegung der Hauptmutter 11 und damit der Gewindemuttereinrichtung 9 insgesamt. Durch die Verbindung mit dem Schubrohr 4 bewegt sich auch dieses translatorisch parallel zur Drehachse 15 der Spindel 5 nach oben. Je nach Anzahl der Umdrehungen der Spindel 5 werden hierdurch ein oder mehrere Teleskoprohre aus der Hubsäule ausgefahren. Durch eine der ersten Drehrichtung entgegengesetzte Drehbewegung der Spindel 5 werden die Teleskoprohre hingegen in die Hubsäule eingefahren.

Wie aus den Fig. 2 bis 6 ersichtlich ist, weist die Gewindemuttereinrichtung 9 einen in zumindest in grober Näherung etwa quaderförmigen und durch Spritzgiessen hergestellten Gewindemutterkörper 16 auf. Dieser hat zwei Hälften 16a, 16b, die jeweils mit einer zylindrischen Ausnehmungen versehen sind. In jeder der zylindrischen Ausnehmungen ist ein Gewindeabschnitt 18a, 18b der Hauptmutter ausgebildet. Die beiden Gewindeabschnitte 18a, 18b ergeben zusammen das Gewinde der Hauptmutter 11. Hierbei ist ein Gewindeanfang des einen Gewindeabschnitts 18b an einer radialen und axialen Stelle angeordnet ist, die einer Fortsetzung des Gewindes des anderen Gewindeabschnitts 18a entspricht.

Die beiden Hälften 16a, 16b sind mit mittels zwei Stegen 19 einstückig miteinander verbunden. Die beiden Stege 19 geben zwischen sich eine Ausnehmung 20 frei, in die als Halter ein Haltestück 21 einsetzbar ist. Das in diesem erfindungsgemässen Ausführungsbeispiel vorgesehene Haltestück 21 ist durch eine polygonartige Aneinanderreihung von Schenkeln 21a - 21 f auf einem Ringteil 21g insgesamt näherungsweise ringförmig gestaltet. In anderen Ausführungsbeispielen könnte das Haltestück jedoch auch eine völlig andere geometrische Gestaltung aufweisen, es könnte beispielsweise quaderförmig sein. An drei seiner Schenkel 21 a, 21 b, 21 c weist das Haltestück 21 Positionierhilfen in Form von Nasen 23 auf, die parallel zur Drehachse 15 der Spindel 5 verlaufen und in den vom Haltestück 21 eingeschlossenen Raum hineinragen.

Die Aussenmasse des Haltestücks 21 sind dabei so bemessen, dass es zumindest näherungsweise in die Ausnehmung 20 passt, und diese ausfüllt. Das Haltestück 21 liegt hierbei zur Ausbildung einer Verdrehsicherung für die Sicherheitsmutter mit Aussenflächen seiner Schenkel 21a-21f formschlüssig gegen seitliche Begrenzungsflächen 20, 20b der Ausnehmung 20 an bzw. die Aussenflächen liegen den seitlichen Begrenzungsflächen 20a, 20b zumindest unmittelbar gegenüber. In Richtung der Drehachse 15 kann die Sicherheitsmutter 12 in der Ausnehmung 20 geringfügig Spiel haben.

An einem seiner Schenkel ist das Haltestück 21 mit einer Nut 24 vorbestimmter Breite und vorbestimmter Länge des Schenkels versehen. Die Ausnehmung 20 des Gewindemutterkörpers 16 hat hierzu eine entsprechend den Massen der Nut 24 ausgebildete Nocke 25, so dass die Nocke 25 vollständig in der Nut 24 aufgenommen werden kann. Ist das Haltestück 21 vollständig in die Ausnehmung 20 eingeschoben, so stösst die Stirnseite der Nut 24 gegen die stirnseitige Begrenzung der Nocke 25. Das Haltestück 21 kann aufgrund der Nut 24 und der Nocke 25 nur in einer vorbestimmten Ausrichtung und nur von einer Seite der Ausnehmung 20 in letztere eingeschoben werden. Die Nut 24 und die Nocke 25 dienen somit als Positionier- und Montagehilfe, damit einerseits das Haltestück 21 ohne zusätzlichen Justageaufwand in der vorbestimmten Position in der Ausnehmung 20 angeordnet werden kann. Andererseits verhindern die Nut 24 und die Nocke 25 auch, dass das Haltestück 21 in einer anderen als der vorbestimmten Ausrichtung in die Ausnehmung 20 einsetzbar ist.

Die hohlzylindrische Sicherheitsmutter 12 ist zur Anordnung innerhalb des Haltestücks 21 vorgesehen. Ein Aussendurchmesser der Sicherheitsmutter 12 entspricht deshalb auch zumindest etwa dem Abstand der sich jeweils gegenüberliegenden Schenkel 21a-21f des Haltestücks 21. Wie es bereits vorbekannt ist, ist das Innengewinde 27 der Sicherheitsmutter 12 mit einer Geometrie versehen, die auf das Innengewinde der Hauptmutter 11 sowie auf das Aussengewinde der Spindel 5 in einer bestimmten Weise abgestimmt ist. Diese Abstimmung ist derart, dass das Gewinde 27 der Sicherheitsmutter 12 zwar innerhalb des Gewindes der Spindel 5 angeordnet, jedoch mit diesem solange nicht in Kontakt ist, wie das Gewinde der Hauptmutter 11 lasttragend ist. Erst bei einem Versagen der Hauptmutter 11 liegt das Gewinde der Sicherheitsmutter 12 am Gewinde der Spindel 5 an, wird hierdurch lasttragend und verhindert so, ein unkontrolliertes Abrutschen der Gewindemuttereinrichtung - und damit auch der jeweils zu tragenden Last - auf der Spindel 5.

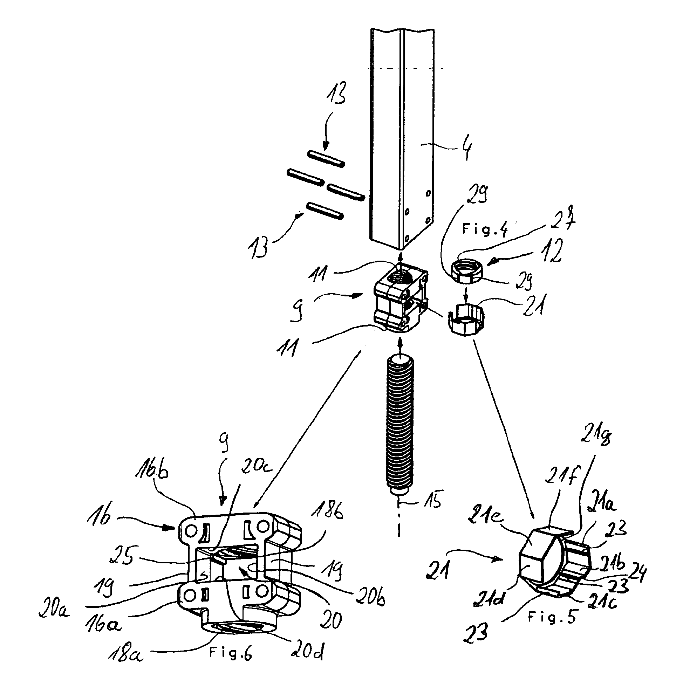

An ihrer Umfangsfläche 28 weist die Sicherheitsmutter 12 als Positionier- und Montagehilfe zur rotationsrichtigen Anordnung gegenüber der Sicherheitsmutter drei nutenförmige Kerben 29 auf, die mit den Nasen 23 des Haltestücks 21 zusammenwirken. In der Darstellung von Fig. 4 sind nur zwei der drei Kerben 29 erkennbar.

Die Sicherheitsmutter ist deshalb zum Einschub in das Haltestück 21 in einer eindeutig vorgegebenen Rotationsposition vorgesehen, in der die Nasen 23 des Rahmens in die Kerben 29 der Sicherheitsmutter 12 eingreifen. Ausser einer korrekten Positionierung der Sicherheitsmutter bei der Montage lässt sich damit auch eine Verdrehung der Sicherheitsmutter in der Linearantriebsvorrichtung solange sicher verhindern, wie das Gewinde der Hauptmutter trägt.

Damit die Sicherheitsmutter 12 nicht nur in Bezug auf ihre radiale Ausrichtung sondern auch seitenrichtig eingesetzt wird, sind die Positionierhilfen des Haltestücks 21 und der Sicherheitsmutter 12 ungleichmässig am Umfang der Sicherheitsmutter verteilt. Damit greifen sämtliche Nasen 23 nur in einer der zwei möglichen Drehposition der Sicherheitsmutter gleichzeitig in die zum Eingriff vorgesehenen Kerben 29. In der anderen Drehposition der Sicherheitsmutter können höchstens zwei der drei Nasen 23 in gleichzeitigen Eingriff mit den Kerben 29 gebracht werden, wodurch in dieser Position eine Montage der Sicherheitsmutter in der Hauptmutter unmöglich wird.

Die Positionier- und Montagehilfen der Sicherheitsmutter und des Rahmens dienen nicht nur zur korrekten und eindeutigen Positionierung sondern zusätzlich auch als Sollbruchmittel. Letzteres dient dazu die Sicherheitsmutter 12 bei Versagen des Gewindes der Hauptmutter 11 in Einsatz zu bringen. Nachdem die Sollbruchmittel durch das dann auf sie aufgrund ausreichend grossem Kontakt zwischen dem Gewinde der Spindel 5 und dem Gewinde der Sicherheitsmutter 12 wirkende Drehmoment zerstört sind, greift das Gewinde der Sicherheitsmutter in das Gewinde 6 der Spindel 5 und trägt die Last.

Zudem sind die Kerben 29 sowie die Nase 25 einerseits sowie der Gewindeanfang (bzw. die Gewindeanfänge bei mehrgängigen Gewinden) der Sicherheitsmutter 12 in radialer Richtung zueinander in vorbestimmter Weise zueinander ausgerichtet. Diese Ausrichtung ist derart vorgenommen, dass sich bei einer Anordnung der Kerben 29 in den Nase 25 das Gewinde der Sicherheitsmutter eine Fortsetzung des Gewindes der Hauptmutter darstellt. Das Gewinde der Sicherheitsmutter beginnt also an einer Stelle, an der sich auch das Gewinde der Hauptmutter befinden würde, falls es bis in den Bereich der Sicherheitsmutter ausgebildet wäre. Selbstverständlich weisen die Hauptmutter und die Sicherheitsmutter Gewinde mit gleichen Steigungen auf.

Zur Montage wird die Sicherheitsmutter 12 in das Haltestück 21 in der einzig möglichen Position eingesetzt. Nachfolgend wird das Haltestück 21 mit der Sicherheitsmutter 12 in die Ausnehmung 20 eingeschoben. Auch hierfür ist aufgrund der Positionierhilfe nur eine einzige Ausrichtung und eine einzige Einschubrichtung möglich. Danach wird die so vormontierte Gewindemuttereinrichtung 9 in das Schubrohr 4 eingesetzt und an diesem befestigt. Nun kann die Spindel 5 in das Gewinde 18a der unteren Hälfte 16a der Hauptmutter 11 eingedreht werden. Die Spindel 5 findet hierbei von selbst das Gewinde 27 der Sicherheitsmutter 12 und dreht sich auch in dieses ein. Ebenso trifft das Gewinde 7 der Spindel 5 auch das Gewinde 18b der oberen Hälfte 16b der Hauptmutter 11.

Versagt die Hauptmutter im Betrieb der Linearantriebsvorrichtung so hat dies zunächst den bereits beschriebenen Bruch der Nasen der Sicherheitsmutter 12 zur Folge. Die Sicherheitsmutter 12 ist nun lasttragend und verschiebt sich innerhalb der Ausnehmung 20 solange, bis die Sicherheitsmutter (in Abhängigkeit von der Wirkrichtung des Antriebs [Zug oder Druckrichtung]) gegen eine obere oder untere Begrenzungsfläche 20c, 20d der Ausnehmung 20 anliegt. Beim Einfahren des Schubrohres 4 in Richtung auf den Motor 8 der Linearantriebsvorrichtung führt die auf die Sicherheitsmutter wirkende Last dazu, dass zwischen der oberen Begrenzungsfläche 20c und der Sicherheitsmutter 12 eine relativ grosse Reibkraft wirkt, die zwischen den Reibpartnern eine Haftreibung entstehen lässt. Das Schubrohr 4 kann hierdurch zusammen mit der Last in Richtung auf den Motor 8 geradlinig bewegt werden.

Wird hingegen versucht aufgrund einer hierzu entgegen gesetzten Drehrichtung der Spindel 5 das Schubrohr 4 auszufahren, so kommt die Sicherheitsmutter 12 in Anlage gegen die untere Begrenzungsfläche 20d der Ausnehmung 20. In diesem Fall drückt jedoch die vom Schubrohr 4 zu tragende Last die Sicherheitsmutter 12 nicht gegen die untere Begrenzungsfläche 20d. Somit ist die Reibkraft zwischen der Sicherheitsmutter und dem Gewindemutterkörper 16 vergleichsweise gering, weswegen die Sicherheitsmutter 12 sich auf dem Gewinde der Spindel 5 dreht ohne eine lineare Verfahrbewegung zu erzeugen.

### Bezugszeichenliste

- 1: teleskopische Hubsäule
- 2: Teleskoprohre
- 3: Standelement
- 4: Schubrohr
- 5: Spindel
- 6: Linearantriebsvorrichtung
- 7: Außengewinde Spindel
- 8: Motor
- 9: Gewindemuttereinrichtung
- 11: Hauptmutter
- 12: Sicherheitsmutter
- 13: Verstiftung
- 14: Deckplatte
- 15: Drehachse
- 16: Gewindemutterkörper
- 16a: Hälfte
- 16b: Hälfte
- 18a: Gewindeabschnitt
- 18b: Gewindeabschnitt
- 19: Steg
- 20: Ausnehmung
- 20a: Begrenzungsfläche
- 20b: Begrenzungsfläche
- 20c: Begrenzungsfläche
- 20d: Begrenzungsfläche
- 21: Haltestück
- 21a: Schenkel
- 21b: Schenkel
- 21c: Schenkel
- 21d: Schenkel
- 21e: Schenkel
- 21f: Schenkel
- 21g: Ringteil
- 23: Nase
- 24: Nut
- 25: Nocke
- 27: Innengewinde
- 28: Umfangsfläche
- 29: Kerbe

## Patentansprüche

1. Gewindemuttereinrichtung (9) für einen mit einer drehbaren Spindel (5) versehenen Linearantrieb, die
mit einer Hauptmutter (11) versehen ist, wobei die Hauptmutter (11) zur Anordnung mit ihrem Innengewinde auf dem Außengewinde der Spindel (5) vorgesehen ist, und die bei einer Drehbewegung der Spindel (5) zur Ausführung einer translatorischen Verschiebebewegung bestimmt ist, ferner
eine Sicherheitsmutter (12) aufweist, die dazu bestimmt ist im Normalbetrieb des Linearantriebs mit ihrem Innengewinde nicht in Eingriff mit dem Außengewinde der Spindel (5) zu stehen und die bei einem Versagen der Hauptmutter (11) mit dem Gewinde der Spindel (5) in Eingriff kommt,
**dadurch gekennzeichnet, dass**
die Hauptmutter (11) einen ersten und einen zweiten Teil aufweist, die beiden Teile voneinander beabstandet sind und jeder Teil mit einem Gewindeabschnitt (18a, 18b) der Hauptmutter (11) versehen ist, wobei die Sicherheitsmutter (12) zur Anordnung zwischen den beiden Gewindeabschnitten (18a, 18b) vorgesehen ist.

2. Gewindemuttereinrichtung (9) nach Anspruch 1, **dadurch gekennzeichnet, dass** die beiden Gewindeabschnitte (18a, 18b) der Hauptmutter (11) zumindest im wesentlichen gleich lang sind.

3. Gewindemuttereinrichtung (9) nach Anspruch 1 oder 2, **dadurch gekennzeichnet, dass** ein Gewindeanfang des einen Gewindeabschnitts (18a, 18b) an einer radialen und axialen Stelle angeordnet ist, die einer Fortsetzung des Gewindes des anderen Gewindeabschnitts (18a, 18b) entspricht.

4. Gewindemuttereinrichtung (9) nach zumindest einem der vorhergehenden Ansprüche, **gekennzeichnet durch** eine Positionierungshilfe zur Positionierung der Sicherheitsmutter (12) in einer vorbestimmten Position gegenüber der Hauptmutter (11) zwischen den beiden Gewindeabschnitten (18A, 18b).

5. Gewindemuttereinrichtung (9) nach Anspruch 4, **dadurch gekennzeichnet, dass** die Positionierungshilfe Mittel zur Positionierung der Sicherheitsmutter (12) in einer vorbestimmten radialen Position aufweist.

6. Gewindemuttereinrichtung (9) nach Anspruch 5, **dadurch gekennzeichnet, dass** an der Sicherheitsmutter (12) Mittel zur Positionierung in einer vorbestimmten radialen Position vorgesehen sind und diese Mittel in einer vorbestimmten Position gegenüber einem Gewindeanfang der Sicherheitsmutter (12) angeordnet sind.

7. Gewindemuttereinrichtung (9) nach einem der Ansprüche 4 bis 6, **dadurch gekennzeichnet, dass** die Positionierungshilfe Mittel zur Positionierung der Sicherheitsmutter (12) in einer vorbestimmten axialen Position aufweist.

8. Gewindemuttereinrichtung (9) nach Anspruch 7, **dadurch gekennzeichnet, dass** das Mittel zur Positionierung der Sicherheitsmutter (12) in einer vorbestimmten axialen Position einen Halter aufweist, der zur Aufnahme der Sicherheitsmutter (12) vorgesehen ist.

9. Gewindemuttereinrichtung (9) nach 8, **dadurch gekennzeichnet, dass** der Halter in einen Bereich zwischen den beiden Gewindeabschnitten (18a, 18b) einsetzbar ist.

10. Gewindemuttereinrichtung (9) nach Anspruch 9, **gekennzeichnet durch** eine Positionierungshilfe, die Mittel zur Anordnung des Halters in einer Position ermöglicht, in der eine Längsachse der Sicherheitsmutter (12) mit der Längsachse der beiden Gewindeabschnitte (18a, 18b) fluchtet.

11. Gewindemuttereinrichtung (9) nach zumindest einem der vorhergehenden Ansprüche, **dadurch gekennzeichnet, dass** eine Länge der Sicherheitsmutter (12) in axialer Richtung zumindest im wesentlichen dem Abstand der beiden Gewindeabschnitte (18a, 18b) entspricht.

12. Gewindemuttereinrichtung (9) nach zumindest einem der vorhergehenden Ansprüche **dadurch gekennzeichnet, dass** die Sicherheitsmutter in genau einer axialen Position zwischen den Gewindeabschnitten (18a, 18b) auf die Spindel (5) eingedreht werden kann.

13. Linearantriebsvorrichtung (6) zur Ausführung einer translatorischen Nutzbewegung, der einen Antrieb aufweist mit der eine Spindel (5) rotatorisch antreibbar ist auf der eine Gewindemuttereinrichtung angeordnet ist, die mit einer Hauptmutter (11) und einer Sicherheitsmutter (12) versehen ist, hierbei die Gewindemuttereinrichtung (9) gegen rotatorische Bewegungen gesichert ist, wodurch die rotatorische Bewegung der Spindel (5) zu einer translatorische Bewegung der Hauptmutter (11) führt, **gekennzeichnet durch** eine Gewindemuttereinrichtung (9) nach einem oder mehreren der vorhergehenden Ansprüche 1 bis 11.

## Claims

1. Threaded nut device (9) for a linear actuator provided with a rotatable spindle (5), which
is provided with a main nut (11), the main nut (11) being provided for arrangement with its internal thread on the external thread of the spindle (5), and which is intended for performing a translatory displacing motion during a rotary motion of the spindle (5), and
comprises a safety nut (12) which, during normal operation of the linear actuator, is not intended to be engaged by its internal thread with the external thread of the spindle (5), and which comes into engagement with the thread of the spindle (5) in the event of failure of the main nut (11),
**characterised in that**
the main nut (11) comprises a first and a second part, both parts being spaced apart from one another and each part being provided with a threaded portion (18a, 18b) of the main nut (11), the safety nut (12) being provided for arranging between the two threaded portions (18a, 18b).

2. Threaded nut device (9) according to Claim 1, **characterised in that** the two threaded portions (18a, 18b) of the main nut (11) are at least substantially of the same length.

3. Threaded nut device (9) according to Claim 1 or 2, **characterised in that** the start of the thread of the one threaded portion (18a, 18b) is arranged at a radial and axial point which corresponds to a continuation of the thread of the other threaded portion (18a, 18b).

4. Threaded nut device (9) according to at least one of the preceding claims, **characterised by** a positioning aid for positioning the safety nut (12) in a predetermined position relative to the main nut (11) between the two threaded portions (18a, 18b).

5. Threaded nut device (9) according to Claim 4, **characterised in that** the positioning aid comprises means for positioning the safety nut (12) in a predetermined radial position.

6. Threaded nut device (9) according to Claim 5, **characterised in that** means are provided on the safety nut (12) for positioning in a predetermined radial position and said means are arranged in a predetermined position relative to the start of the thread of the safety nut (12).

7. Threaded nut device (9) according to one of Claims 4 to 6, **characterised in that** the positioning aid comprises means for positioning the safety nut (12) in a predetermined axial position.

8. Threaded nut device (9) according to Claim 7, **characterised in that** the means for positioning the safety nut (12) in a predetermined axial position comprises a holder which is provided for receiving the safety nut (12).

9. Threaded nut device (9) according to Claim 8, **characterised in that** the holder may be inserted into a region between the two threaded portions (18a, 18b).

10. Threaded nut device (9) according to Claim 9, **characterised by** a positioning aid which permits the arrangement of the holder in a position in which a longitudinal axis of the safety nut (12) is aligned with the longitudinal axis of the two threaded portions (18a, 18b).

11. Threaded nut device (9) according to at least one of the preceding claims, **characterised in that** a length of the safety nut (12) in the axial direction corresponds at least substantially to the distance between the two threaded portions (18a, 18b).

12. Threaded nut device (9) according to at least one of the preceding claims, **characterised in that** the safety nut may be screwed onto the spindle (5) in exactly one axial position between the threaded portions (18a, 18b).

13. Linear actuator apparatus (6) for performing a useful translatory motion, which comprises a drive by which a spindle (5) may be driven in a rotational manner and on which a threaded nut device is arranged which is provided with a main nut (11) and a safety nut (12), the threaded nut device (9) being thus secured against rotary motions, whereby the rotary motion of the spindle (5) leads to a translatory motion of the main nut (11), **characterised by** a threaded nut device (9) according to one or more of the preceding Claims 1 to 11.

## Revendications

1. Système d'écrous taraudés (9) pour un entraînement linéaire muni d'une broche rotative (5), qui
est muni d'un écrou principal (11), l'écrou principal (11) étant prévu pour être disposé par son taraudage sur le filetage de la broche (5) et qui est destiné à exécuter, lors d'un déplacement en rotation de la broche (5) un déplacement en translation, par ailleurs
comporte un écrou de sécurité (12), qui, en mode de fonctionnement normal de l'entraînement linéaire est destiné à ne pas être en engagement par son taraudage avec le filetage de la broche (5) et qui en cas de défaillance de l'écrou principal (11) vient s'engager sur le filetage de la broche (5),
**caractérisé en ce que**
l'écrou principal (11) comporte une première et une deuxième parties, **en ce que** les deux parties sont écartées l'une de l'autre et **en ce que** chaque partie est munie d'un tronçon de taraudage (18a, 18b) de l'écrou principal (11), l'écrou de sécurité (12) étant prévu pour être disposé entre les deux tronçons de taraudage (18a, 18b).

2. Système d'écrous taraudés (9) selon la revendication 1, **caractérisé en ce que** les deux tronçons de taraudage (18a, 18b) de l'écrou principal (11) sont au moins sensiblement de la même longueur.

3. Système d'écrous taraudés (9) selon la revendication 1 ou 2, **caractérisé en ce qu'**un début de taraudage de l'un des tronçons de taraudage (18a, 18b) est disposé en un endroit radial et axial qui correspond à un prolongement du taraudage de l'autre tronçon de taraudage (18a, f8b).

4. Système d'écrous taraudés (9) selon au moins l'une quelconque des revendications précédentes, **caractérisé par** un auxiliaire de positionnement, pour positionner l'écrou de sécurité (12) dans une position prédéterminée par rapport à l'écrou principal (11) entre les deux tronçons de taraudage (18a, 18b).

5. Système d'écrous taraudés (9) selon la revendication 4, **caractérisé en ce que** l'auxiliaire de positionnement comporte des moyens pour positionner l'écrou de sécurité (12) dans une position radiale prédéfinie.

6. Système d'écrous taraudés (9) selon la revendication 5, **caractérisé en ce que** sur l'écrou de sécurité (12) sont prévus des moyens de positionnement dans une position radiale prédéterminée et **en ce que** lesdits moyens sont disposés dans une position prédéterminée par rapport au début de taraudage de l'écrou de sécurité (12).

7. Système d'écrous taraudés (9) selon l'une quelconque des revendications 4 à 6, **caractérisé en ce que** l'auxiliaire de positionnement comporte des moyens pour le positionnement de l'écrou de sécurité (12) dans une position axiale prédéterminée.

8. Système d'écrous taraudés (9) selon la revendication 7, **caractérisé en ce que**, dans une position axiale prédéterminée, le moyen de positionnement de l'écrou de sécurité (12) comporte un support qui est destiné au logement de l'écrou de sécurité (12).

9. Système d'écrous taraudés (9) selon la revendication 8, **caractérisé en ce que** le support est insérable dans une zone entre les deux tronçons de taraudage (18a, 18b).

10. Système d'écrous taraudés (9) selon la revendication 9, **caractérisé par** un auxiliaire de positionnement, qui permet des moyens pour disposer le support dans une position dans laquelle un axe longitudinal de l'écrou de sécurité (12) est aligné sur l'axe longitudinal des deux tronçons de taraudage (18a, 18b).

11. Système d'écrous taraudés (9) selon au moins l'une quelconque des revendications précédentes, **caractérisé en ce qu'**une longueur de l'écrou de sécurité (12) en direction axiale correspond au moins sensiblement à un écart entre les deux tronçons de taraudage (18a, 18b).

12. Système d'écrous taraudés (9) selon au moins l'une quelconque des revendications précédentes, **caractérisé en ce que** l'écrou de sécurité peut être vissé sur l'arbre dans précisément une position axiale entre les tronçons de taraudage (18a, 18b).

13. Dispositif d'entraînement linéaire (5) pour réaliser un déplacement technique en translation qui comporte un entraînement à l'aide duquel une broche (5) sur laquelle est disposé un système d'écrous taraudés qui est muni d'un écrou principal (11) et d'un écrou de sécurité (12) est susceptible d'être entraînée en rotation, à cet effet, le système d'écrous taraudés (9) est bloqué contre des déplacements en rotation, de ce fait le déplacement en rotation de la broche (5) conduit à un déplacement en translation de l'écrou principal (11), **caractérisé par** un système d'écrous taraudés (9) selon l'une quelconque ou plusieurs des revendications précédentes 1 à 11.
